# EUROPEAN PATENT SPECIFICATION

(11) **EP 4 342 652 B1**
(45) Date of publication and mention of the grant of the patent: **15.10.2025**
(21) Application number: 23198946.8
(22) Date of filing: 21.09.2023
(51) Int. Cl.: B29C 45/14, B60R 13/02, F16B 5/06, F16B 21/07, B29L 31/00, B29L 31/30

(54) **METHOD FOR MOLDING A FASTENER CLIP ASSEMBLY**
VERFAHREN ZUM FORMEN EINER BEFESTIGUNGSKLAMMERANORDNUNG
PROCÉDÉ DE MOULAGE D'UN ENSEMBLE ATTACHÉ DE FIXATION

(30) Priority: 26.09.2022 US 202263410023 P; 31.08.2023 US 202318459346
(43) Date of publication of application: 27.03.2024
(60) Divisional application: 25201268.7
(73) Proprietor: Termax Company, Lake Zurich, IL 60047 (US)
(72) Inventor: Dickinson, Daniel James, 60069 Lincolnshire, Illinois (US); Friesorger, David, 60050 McHenry, Illinois (US)
(74) Representative: Weinstein Services & Conseils

(56) References cited:
- EP-A1- 3 779 216
- EP-A1- 4 253 770
- WO-A2-2004/004947
- DE-A1- 102019 115 093
- US-A1- 2020 339 044

## Description

### A. Background

The invention relates generally to molding of devices for fastening together two or more objects, Several devices and fasteners are currently available for fastening panels, such as body panels and automobile interior trim piece panels, to the chassis of a vehicle. As used herein, a body panel refers to, for example, any interior or exterior body panel on a vehicle, a plastic interior trim piece, headliner, or any interior trim piece. Additionally, the panel may be any suitable exterior body panel, such as a fender, bumper, quarter panel, or door panel. The chassis of the vehicle may include any substrate, plate, body panel, structural framework, chassis component or subcomponent, wall, or any suitable object.

These body panels typically are required to attach to the chassis of an automobile with a relatively low level of insertion force while providing a high level of extraction force suitable to maintain attachment of the panel to the chassis. However, these conventional fastener devices instead provide approximately equal levels of insertion and extraction force. Further, conventional fasteners typically do not adequately secure the panel to the vehicle chassis having sheet metal with different curvature or thicknesses throughout. In addition, conventional fasteners are not suitable under a variety of environmental conditions, such as in the presence of vibration at various levels of amplitude and frequency. For example, the fastener device should prevent or minimize the amount of buzzing, rattling, or any other type of noise that may cause attention to the occupants of the vehicle or otherwise weaken the attachment. In addition, conventional fasteners do not adequately accommodate various levels of production tolerances, such as various dimensions amongst, for example, the body panels as well as the vehicle chassis. Thus, conventional fastener devices typically do not adequately fasten to a range of sheet metal thicknesses and do not minimize or eliminate buzzing and rattling and do not sufficiently accommodate variations in production tolerances.

Fastener clips, such as metal spring fasteners, are known for attaching body panels to an automobile chassis. For example, fastener clips are known to have a base plate and four stepped arms extending from the base plate. Each stepped arm includes four incremental steps (stair-steps) suitable for engaging a slot in a vehicle chassis with one of the steps on each arm. The incremental steps allow for engagement, however, in only one of the four discrete step positions rather than over a continuous range of engagement positions. Further, each step has a relatively large rise and run so that, once inserted, movement of the fastener clip within the range of a step size may occur, resulting in wear and/or the generation of noise, including buzzing and rattling as a result of vibrations occurring within the vehicle. In addition, the steps typically cut onto each arm during manufacture and require twisting of each wing on the fastener clip in order to engage the slot in the vehicle chassis. As a result, only an edge or a portion of an edge of each of the steps engages the hole in the vehicle slot.

If the sheet metal varies in thickness or if tolerances in production of the slot in the vehicle chassis or in the trim-piece exist, for example, then engagement of one portion of the hole in the chassis with one of the arms may not provide suitable frictional engagement or otherwise result in movement. Further, less than all four of the arms will make engagement with the slot of the vehicle chassis. Twisting of the body panel will be likely more prevalent because less than four contact points are made with the slot of the vehicle chassis. As a result, wear, squeaks, rattles, buzzing, corrosion and loss of elasticity and loss of sealing may result, especially after years of vehicle operation and exposure to vibration and other environmental conditions.

EP3779216-A1 discloses a fastener clip made with a combination of metal and an injection moldable plastic. The metal portion is made first. The plastic is then injected around the metal.

### B. Brief Description of the Drawings

Other objects and advantages of the invention may become apparent upon reading the detailed description and upon reference to the accompanying drawings.
Figure 1 is an exploded view of a fastener clip assembly, obtained with the method of the current invention.
Figure 2 is a perspective view of a fastener clip.
Figure 3 is a view of a fastener clip.
Figure 4 is a perspective view of a fastener clip loosely secured on a blade before engaging a slot in a structure, obtained with the method of the invention.
Figure 5 is a cross-sectional view of a fastener clip loosely secured on a blade before engaging a slot in a structure, obtained with the method of the invention.
Figure 6 is a perspective view of an installed fastener clip assembly, obtained with the method of the invention.
Figure 7 is a cross-sectional view of an installed fastener clip assembly, obtained with the method of the invention.
Figure 8 is a perspective view of an injection mold utilizing a fastener clip, as used in the method of the invention.
Figure 9 is a perspective view of a plastic-filled injection mold utilizing a fastener clip, in the method of the invention.
Figure 10 is a perspective view of a molded blade and plastic component after the removal of an injection mold utilizing a fastener clip, in accordance with the method of the invention.

While the invention is subject to various modifications and alternative forms, specific embodiments thereof are shown by way of example in the drawings and the accompanying detailed description. It should be understood, however, that the drawings and detailed description are not intended to limit the invention to the particular embodiments. This disclosure is instead intended to cover all modifications falling within the scope of the present invention as defined by the appended claims.

### C. Detailed Description

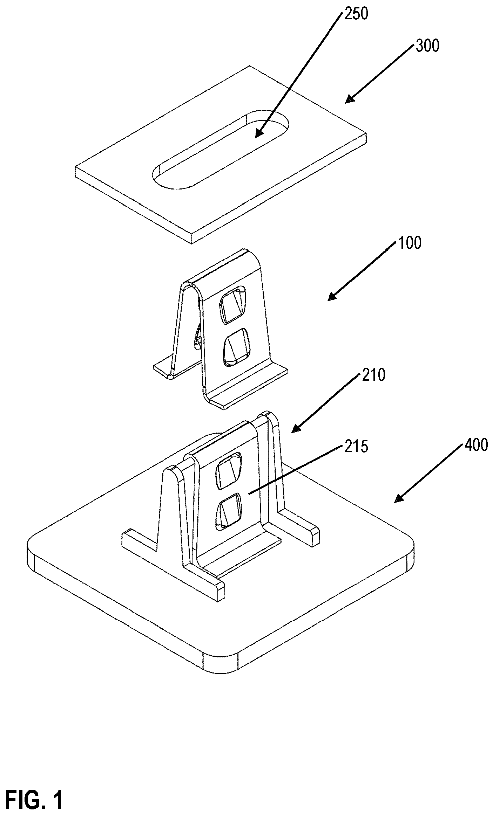

Figure 1 is an exploded view of a fastener clip assembly.

In some embodiments, fastener clip 100 is configured to fasten together structure 300 and component 400. Blade 210, which extends from component 400, is configured to receive fastener clip 100, which is configured to attach to blade 210.

In accordance with the method of the invention blade 210 is molded onto component 400 using fastener clip 100 as part of the injection mold for the blade.

In embodiments where fastener clip 100 may be used as part of the mold for forming at least a portion of blade 210, the contour of the inside surface of fastener clip 100 may be transferred to a corresponding portion of blade 210. The transferred contour may include the general shape of fastener clip 100 as well as additional features such as any depressions and projections.

In some embodiments, fastener clip 100 may also be configured to be inserted through slot 250 of structure 300 and to secure itself to structure 300. In some embodiments, the fastener clip is configured to fasten together structure 300 and component 400.

In some embodiments, component 400 may be or be a part of an automobile component, such as a body panel, and structure 300 may be part of the chassis of an automobile frame or any other structure to which component 400 may attach to. Accordingly, fastener clip 100 assembly may be configured to fasten together a body panel to the chassis structure of an automobile.

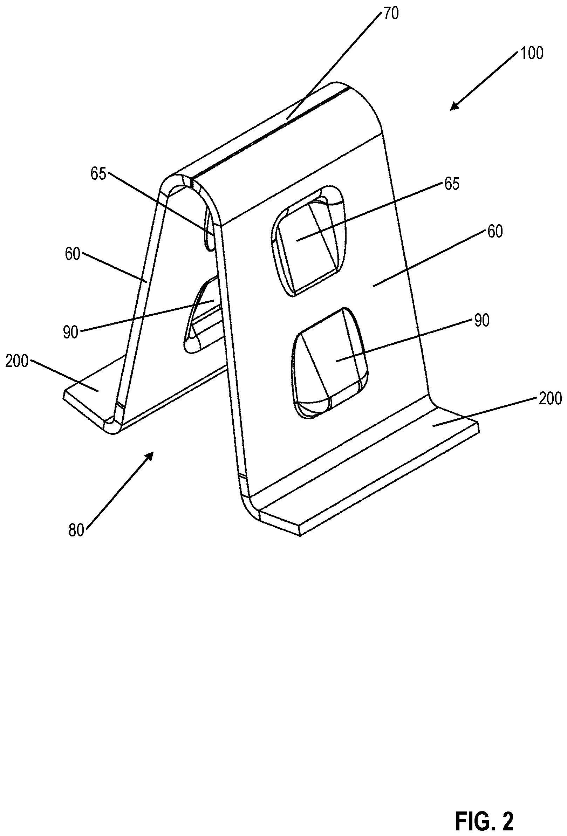

Figure 2 is a perspective view of a fastener clip.

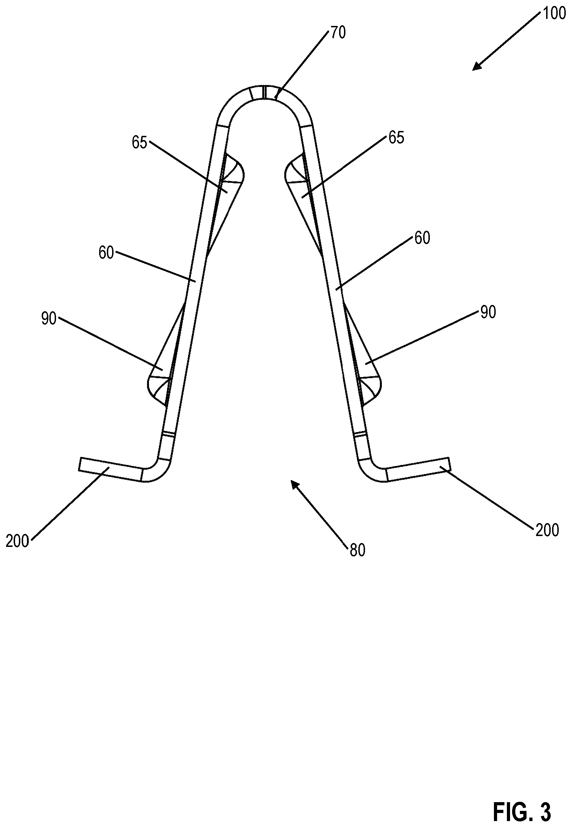

Figure 3 is a view of a fastener clip.

In some embodiments, fastener clip 100 includes two laterally offset legs 60 joined at a head portion 70. Legs 60 form a clip opening 80 at an opposite end of the head portion 70 to allow entry of the blade 210 to which clip 100 is configured to attach. In embodiments where fastener clip 100 may be used as part of the mold to use the blade, clip opening 80 may be used to inject mold into the inside of fastener clip 100

In some embodiments, fastener clip 100 is made of material that facilitates a spring action for fastener clip 100 (metal, for example), such that when legs 60 are compressed together, legs 60 are configured to return substantially back to their original position.

In some embodiments, legs 60 end, at an end opposite to head portion 70, to feet 200. In some embodiments, feet 200 may serve as a stopping point for how far fastener clip 100 may be inserted into slot 250. The stopping point may be determined by when the feet 200 reach structure 300, for example.

In some embodiments, fastener clip 100 may also include at least one pair of inward projections 65, one inward projection 65 on each leg 60, for example. In some embodiments, each leg 60 may include additional inward projections, such as two inward projections per leg, for example. In some embodiments, inward projections 65 may extend inward toward the blade to which fastener clip 100 is configured to attach to.

In some embodiments, the fastener clip 100 may be made out of metal, and the blade 210 may be made out of plastic. In some embodiments, inward projections 65 may be formed by stamping the metal, embossing, bent cutouts, etc. In some embodiments, inward projections 65 are configured to engage corresponding depressions in the blade to secure fastener clip 100 to the blade.

In some embodiments, fastener clip 100 may also include a pair of outward projections 90, one outward projection 90 on each leg 60, for example. In some embodiments, each leg 60 may include additional outward projection, such as two outward projections per leg, for example. In some embodiments, outward projections 90 are configured to engage corresponding projections on the blade to secure fastener clip 100 to the blade.

In some embodiments, outward projections 90 may extend outward toward a perimeter of the slot to which fastener clip 100 is configured to attach. In some embodiments, legs 60 of fastener clip 100 are configured to spring inward as the clip is pushed into the slot and to spring outward again as outward projections 90 are passed the edge of the slot. As such, the bottom surfaces of outward projections 90 are now engaging a top surface of the perimeter of the slot (or the inner part of the slot), thereby securing fastener clip 100 to the structure into which the slot was made.

In some embodiments, inward projections 65 and outward projections 90 may be formed by stamping the metal of fastener clip 100, embossing, bent cutouts, etc. In embodiments where the fastener clip 100 may be used as part of the mold to form the blade, the projections may be made by a process that does not create openings in the fastener clip, such as stamping, for example. Alternatively, in embodiments where openings are created, the openings may be closed by other means, such as overmolding rubber onto the fastener clip, for example.

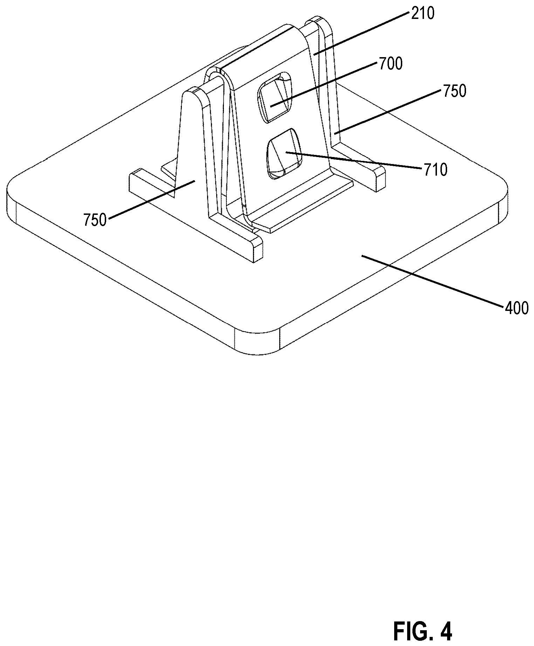

Figure 4 is a perspective view of a fastener clip loosely secured on a blade before engaging a slot in a structure.

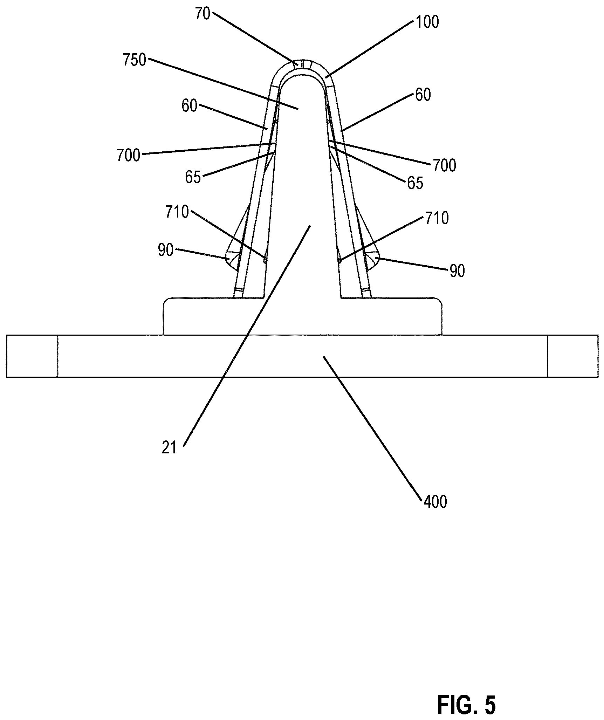

Figure 5 is a cross-sectional view of a fastener clip loosely secured on a blade before engaging a slot in a structure.

In some embodiments, blade 210 is configured to receive and attach to fastener clip 100. Blade 210 is molded as part of component 400. The component 400 is made of plastic and the structure of blade 210 is molded as part of component 400. In some embodiments, component 400 may be an automobile panel that is to be attached to an automobile chassis structure.

In some embodiments, guiding structures 750, positioned on either side of blade 210, are configured to guide fastener clip 100 over blade 210 as the fastener clip is being inserted over the blade and to guide fastener clip 100 into a slot in the structure that fastener clip 100 is configured to engage. In addition, guiding structures 750 are configured to provide additional stability to the coupling between blade 210 and fastener clip 100 and the coupling between fastener clip 100 and the slot of the structure after installation.

In some embodiments, blade 210 may also include depressions 700 (which are below projections 65 and may not be directly shown in all the figures) corresponding to inward projections 65 on fastener clip 100. Depressions 700 are configured to couple fastener clip 100 to blade 210 by receiving inward projections 65, thereby providing resistance through contact forces against inward projections 65, preventing fastener clip 100 from being removed from blade 210. In some embodiments, a greater resistance may be exerted by depressions 700, the more legs 60 are compressed toward each other, as would be the case when fastener clip 100 is installed in a slot in a structure, for example.

In some embodiments, depressions 700 are configured to provide enough extraction resistance when coupled to inward projections 65 when fastener clip is placed over the blade but without the fastener clip being installed into a slot in a structure. As such, the fastener may be installed on a component (and also shipped to a different location, for example) before the fastener clip and the component are installed into a structure by loosely remaining coupled to the blade.

In some embodiments, blade 210 may also include projections 710 (which are below projections 90 and may not be directly shown in all the figures) corresponding to outward projections 90 on fastener clip 100. Projections 710 are configured to couple fastener clip 100 to blade 210 by projecting into outward projections 90, thereby providing resistance through contact forces against outward projections 90, preventing fastener clip 100 from being removed from blade 210. In some embodiments, a greater resistance may be exerted by outward projections 90, the more legs 60 are compressed toward each other, as would be the case when fastener clip 100 is installed in a slot in a structure, for example.

In embodiments where fastener clip 100 is made of metal and blade 210 is made of plastic, the fastener clip may be used as part of the mold when molding the blade portion of the component. As such, if the fastener clip is used as part of the mold when the plastic for the blade is injected, the blade surface contour follows the inside contour of the fastener clip. As such, depressions 700 have substantially the same contour as inward projections 65 and projections 710 have substantially the same contour as outward projections 90. In some embodiments, with the fastener clip and the blade having the same contours, the fastener clip engagement to the blade is increased by the increased contact forces generated by the two having the same contours along their contact surfaces.

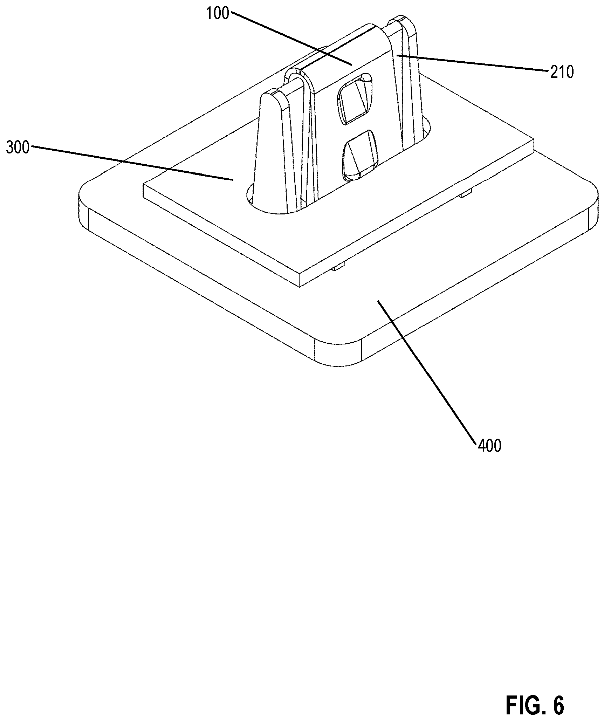

Figure 6 is a perspective view of an installed fastener clip assembly.

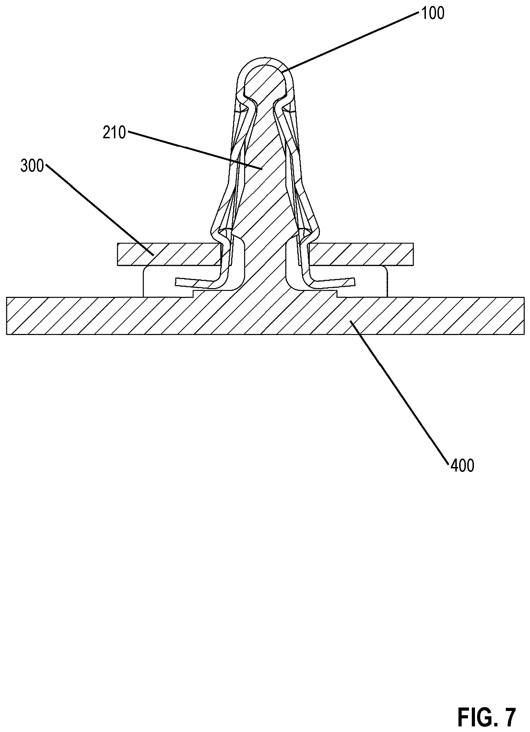

Figure 7 is a cross-sectional view of an installed fastener clip assembly.

In some embodiments, the fastener clip assembly is configured to couple a component to a structure, such as component 400 to structure 300. Fastener clip 100 is configured to fit over and attach to blade 210, with blade 210 being coupled to component 400, and in addition, fastener clip 100 is configured to be removably attached to a slot in structure 300. For example, the fastener clip system may be used to fasten together a body panel to the chassis of an automobile.

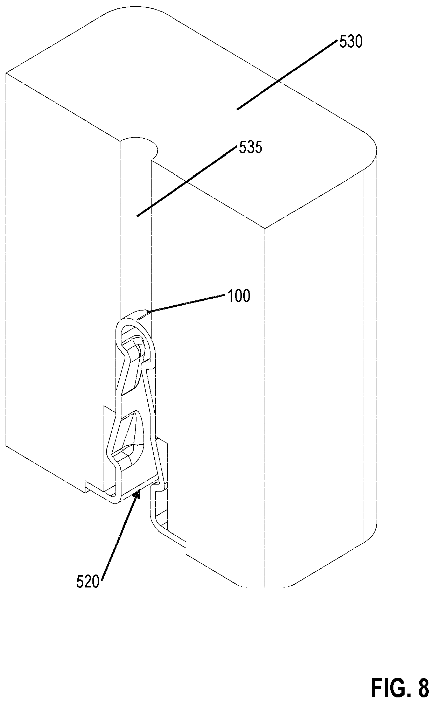

Figure 8 is a perspective view of an injection mold utilizing a fastener clip, as used in the method of the invention.

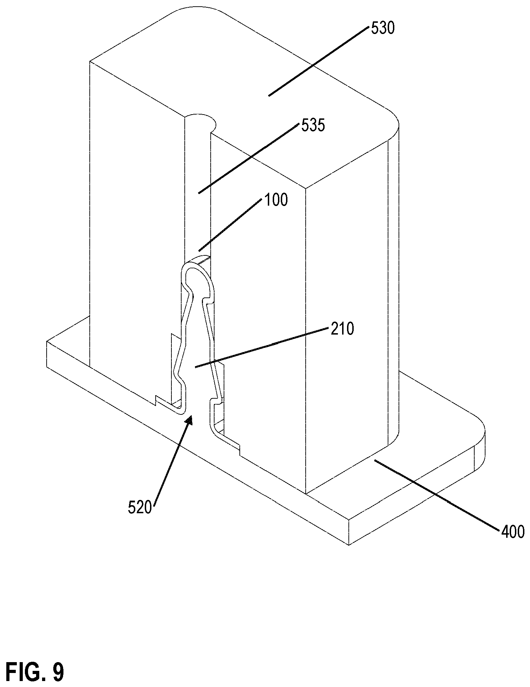

Figure 9 is a perspective view of a plastic-filled injection mold utilizing a fastener clip in the method of the invention.

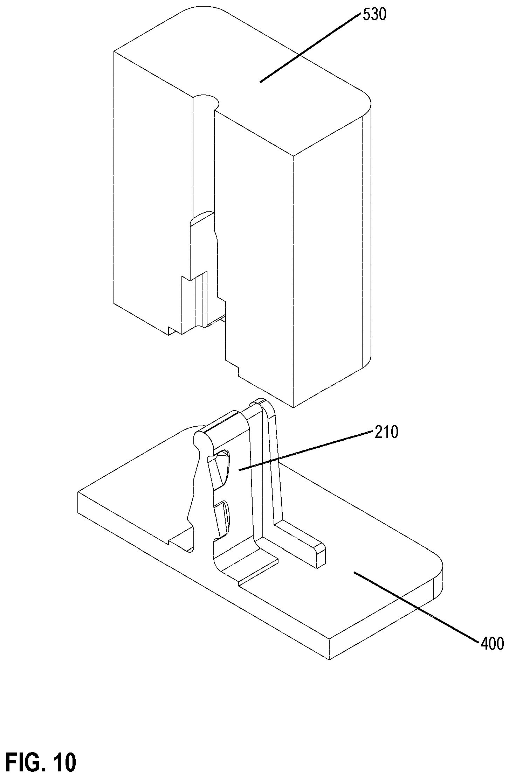

Figure 10 is a perspective view of a molded blade and plastic component after the removal of an injection mold utilizing a fastener clip, in accordance with the method of the invention.

In some embodiments, injection-mold 530 may be used for injection-molding plastic components, such as plastic component 400 and blade 210, which is to be molded with and thereby attached to plastic component 400.

In some embodiments, a cavity inside injection-mold 530 may be used to dictate the shape and contour of plastic component 400 and the shape and contour of blade 210 after flowing plastic is injected into cavity 535 of injection-mold 530.

The fastener clip 100 is inserted into cavity 535 of injection-mold 530 and used as part of the mold that is to form at least a portion of blade 210. In such embodiments, the shape and contours of fastener clip 100 is used to form the shape and contour of at least a portion of the shape and contour of blade 210.

Following the invention, fastener clip 100 is held in a compressed position during the injection molding process by the walls of cavity 535. In some embodiments, the walls of cavity 535, in addition to being contoured to support the fastener clip 100 in a compressed state, are configured to have widths that increase in magnitude as the cavity extends lower toward the fastener clip. As such, mold 530, after the molding process is complete, is removed in one upward motion without additional provisions.

In some embodiments, injection molding may be performed through chamber 520. Any projections and depressions on fastener clip 100 will yield corresponding depressions and projections on blade 210. In some embodiments, having the contours of blade 210 follow the contours of fastener clip 100 ensures a better coupling between the fastener clip and the blade when the fastener clip is placed over the blade.

In some embodiments, after removing mold 530, fastener clip 100 remains loosely attached to the blade even after the fastener clip springs back to its open position. In some embodiments, the fastener clip may remain attached due to the depressions and projections on the fastener clip remaining loosely attached to the corresponding depressions and projections on the blade.

Figure 9 specifically shows the formation of blade 210 and plastic component 400 after flowing plastic has been injected into mold 530, which includes fastener clip 100. It should be noted that additional mold portions may be required. For example, additional portions may be used in the formation of plastic component 300 as needed.

Figure 10 specifically shows the formed blade 210 after mold 530 is removed. In some embodiments, at least in part by using fastener clip 100, substantially the same contour of the inside surface of fastener clip 100, including the fastener clip's depressions and projections, is transferred to the contour of blade 210.

It is understood that the implementation of other variations and modifications of the present invention in its various aspects will be apparent to those of ordinary skill in the art and that the invention is not limited by the specific embodiments described. It is therefore contemplated to cover by the present invention any and all modifications that fall within the scope of the appended claims.

One or more embodiments of the invention are described above. It should be noted that these and any other embodiments are exemplary and are intended to be illustrative of the invention rather than limiting.

## Claims

1. A method comprising:
inserting a fastener clip (100) inside an injection mold cavity to use as part of the injection mold cavity,
wherein the fastener clip (100) is inserted into the injection mold cavity where a blade (210) is to be formed on a plastic component (400),
wherein the fastener clip (100) is configured to engage and couple to the blade (210) and to the plastic component (400),
wherein the fastener clip (100) is configured to engage and couple to a slot in a structure;
injecting flowing plastic into the fastener clip (100) and the injection mold to form the blade (210);
wherein at least a portion of a contour of a surface of the blade (210) follows a contour of an inner surface of the fastener clip (100);
wherein the inserting comprises inserting the fastener clip (100) into the injection mold cavity in a compressed state.

2. The method of claim 1, wherein the inserting comprises inserting the fastener clip (100) into the injection mold cavity where the blade (210) is to be formed.

3. The method of claim 1, wherein walls of the injection mold cavity step or taper to lower widths toward a bottom of the fastener clip (100).

4. The method of claim 3, comprising removing the injection mold in a single upward motion after forming the blade (210) based at least on the walls of the injection mold cavity step or taper to lower widths toward the bottom of the fastener clip (100).

5. The method of claim 4, wherein the fastener clip (100) is configured to remain loosely on the blade (210) after the removing the injection mold based at least on at least the portion of the contour of the surface of the blade (210) following the contour of the inner surface of the fastener clip (100).

6. The method of claim 1, wherein the fastener clip (100) comprises two or more outward projections (90) and two or more inward projections (65), wherein at least some of the two or more outward projections (90) are configured to engage the slot in the structure.

7. The method of claim 6, wherein a contour of the fastener clip's two or more outward projections (90) and two or more inward projections (65) are transferred to corresponding depressions (700) and projections (710) on the blade (210).

8. The method of claim 6, wherein the fastener clip's two or more outward projections (90) and two or more inward projections (65) are constructed without openings.

## Patentansprüche

1. Verfahren, Folgendes umfassend:
Einsetzen einer Befestigungsklammer (100) in einem Hohlraum einer Spritzgussform, zur Verwendung als Teil des Hohlraums der Spritzgussform,
wobei die Befestigungsklammer (100) dort in den Hohlraum der Spritzgussform eingesetzt wird, wo an einer Kunststoffkomponente (400) ein Blatt (210) zu bilden ist,
wobei die Befestigungsklammer (100) dafür konfiguriert ist, mit dem Blatt (210) und der Kunststoffkomponente (400) ein Eingriff zu gelangen und sich mit diesen zu koppeln,
wobei die Befestigungsklammer (100) dafür konfiguriert ist, mit einem Schlitz in einer Struktur ein Eingriff zu gelangen und sich mit diesem zu koppeln,
Einspritzen fließenden Kunststoffs in die Befestigungsklammer (100) und die Spritzgussform, um das Blatt (210) zu bilden,
wobei mindestens ein Abschnitt eines Umrisses einer Oberfläche des Blattes (210) einem Umriss einer Innenfläche der Befestigungsklammer (100) folgt,
wobei das Einsetzen das Einsetzen der Befestigungsklammer (100) in den Hohlraum der Spritzgussform in einem zusammengedrückten Zustand umfasst.

2. Verfahren nach Anspruch 1, wobei das Einsetzen das Einsetzen der Befestigungsklammer (100) in den Hohlraum der Spritzgussform dort, wo das Blatt (210) zu bilden ist, umfasst.

3. Verfahren nach Anspruch 1, wobei sich Wände des Hohlraums der Spritzgussform hin zu einem Boden der Befestigungsklammer (100) zu geringeren Breiten verjüngen oder gestuft verringern.

4. Verfahren nach Anspruch 3, das Entfernen der Spritzgussform in einer einzigen Aufwärtsbewegung nach dem Bilden des Blattes (210) umfassend, basierend mindestens darauf, dass sich die Wände des Hohlraums der Spritzgussform hin zum Boden der Befestigungsklammer (100) zu geringeren Breiten verjüngen oder gestuft verringern.

5. Verfahren nach Anspruch 4, wobei die Befestigungsklammer (100) dafür konfiguriert ist, nach dem Entfernen der Spritzgussform lose an dem Blatt (210) zu verbleiben, basierend mindestens darauf, dass mindestes der Abschnitt des Umrisses der Oberfläche des Blattes (210) dem Umriss der Innenfläche der Befestigungsklammer (100) folgt.

6. Verfahren nach Anspruch 1, wobei die Befestigungsklammer (100) zwei oder mehr nach außen gerichtete Vorsprünge (90) und zwei oder mehr nach innen gerichtete Vorsprünge (65) umfasst, wobei mindestens einige der zwei oder mehr auswärts gerichteten Vorsprünge (90) dafür konfiguriert sind, mit dem Schlitz in der Struktur in Eingriff zu gelangen.

7. Verfahren nach Anspruch 6, wobei ein Umriss der zwei oder mehr nach außen gerichteten Vorsprünge (90) und der zwei oder mehr nach innen gerichteten Vorsprünge (65) der Befestigungsklammer zu entsprechenden Vertiefungen (700) und Vorsprüngen (710) des Blattes (210) geführt werden.

8. Verfahren nach Anspruch 6, wobei die zwei oder mehr nach außen gerichteten Vorsprünge (90) und die zwei oder mehr nach innen gerichteten Vorsprünge (65) der Befestigungsklammer ohne Öffnungen konstruiert sind.

## Revendications

1. Procédé comprenant :
l'insertion d'une attache de fixation (100) à l'intérieur d'une cavité de moule d'injection à utiliser en tant que partie de la cavité de moule d'injection,
dans lequel l'attache de fixation (100) est insérée dans la cavité du moule d'injection où une lame (210) doit être formée sur un composant en plastique (400),
dans lequel l'attache de fixation (100) est configurée pour se mettre en prise et se coupler avec la lame (210) et le composant en plastique (400),
dans lequel l'attache de fixation (100) est configurée pour se mettre en prise et se coupler avec une fente dans une structure ;
l'injection de plastique fluide dans l'attache de fixation (100) et le moule d'injection pour former la lame (210) ;
dans lequel au moins une portion d'un contour d'une surface de la lame (210) suit un contour d'une surface interne de l'attache de fixation (100) ;
dans lequel l'insertion comprend l'insertion de l'attache de fixation (100) dans la cavité de moule d'injection dans un état comprimé.

2. Procédé selon la revendication 1, dans lequel l'insertion comprend l'insertion de l'attache de fixation (100) dans la cavité de moule d'injection où la lame (210) doit être formée.

3. Procédé selon la revendication 1, dans lequel les parois de la cavité de moule d'injection s'étagent ou se réduisent progressivement jusqu'à des largeurs inférieures vers un fond de l'attache de fixation (100).

4. Procédé selon la revendication 3, comprenant le retrait du moule d'injection en un seul mouvement vers le haut après formation de la lame (210) en se basant au moins sur le fait que les parois de la cavité du moule d'injection s'étagent ou se réduisent progressivement jusqu'à des largeurs inférieures vers le fond de l'attache de fixation (100).

5. Procédé selon la revendication 4, dans lequel l'attache de fixation (100) est configurée pour rester lâche sur la lame (210) après le retrait du moule d'injection en se basant au moins sur le fait qu'au moins la portion du contour de la surface de la lame (210) suit le contour de la surface interne de l'attache de fixation (100).

6. Procédé selon la revendication 1, dans lequel l'attache de fixation (100) comprend deux saillies vers l'extérieur (90) ou plus et deux saillies vers l'intérieur (65) ou plus, dans lequel au moins certaines des deux saillies vers l'extérieur (90) ou plus sont configurées pour se mettre en prise avec la fente dans la structure.

7. Procédé selon la revendication 6, dans lequel les contours des deux saillies vers l'extérieur (90) ou plus et des deux saillies vers l'intérieur (65) ou plus de l'attache de fixation sont transférés vers des creux (700) et des saillies (710) correspondants sur la lame (210).

8. Procédé selon la revendication 6, dans lequel les deux saillies vers l'extérieur (90) ou plus et les deux saillies vers l'intérieur (65) ou plus de l'attache de fixation sont construites sans ouvertures.
